# EUROPEAN PATENT APPLICATION

(11) **EP 4 297 502 A1**
(43) Date of publication of application: **27.12.2023**
(21) Application number: 22776094.9
(22) Date of filing: 23.03.2022
(51) Int. Cl.: H04W 72/02, H04W 74/08, H04W 76/28, H04W 72/12, H04W 4/40, H04W 92/18

(54) **METHOD AND DEVICE FOR RESOURCE SENSING AND SELECTION FOR ONE OR MORE LINKS IN COMMUNICATION SYSTEM SUPPORTING DRX OPERATION**

(30) Priority: 23.03.2021 KR 20210037608
(71) Applicant: HYUNDAI MOTOR COMPANY, Seoul 06797 (KR); Kia Corporation, Seocho-gu Seoul 06797 (KR); Wonkwang University Center for Industry - Academy Cooperation, Iksan-si, Jeollabuk-do 54538 (KR)
(72) Inventor: HONG, Ui Hyun, Hwaseong-si, Gyeonggi-do 18280 (KR); HAHN, Gene Back, Hwaseong-si, Gyeonggi-do 18280 (KR); SON, Hyuk Min, Iksan-si, Jeollabuk-do 54653 (KR)
(74) Representative: Isarpatent
(86) International application number: PCT/KR2022/004074
(87) International publication number: WO 2022/203394

(57) **Abstract**

A method and a device for resource sensing and selection for one or more links in a communication system supporting a DRX operation are disclosed. An operation method of a first terminal comprises the steps of: configuring a first link between the first terminal and a first communication node; configuring a second link between the first terminal and a second communication node; identifying the overlapped interval between a first on-duration interval following a first DRX configuration in the first link and a second on-duration interval following a second DRX configuration in the second link; and performing a reception operation in the overlapped interval on the basis of one or more DRX configurations among the first DRX configuration and the second DRX configuration.

## Description

### [Technical Field]

The present disclosure relates to a sidelink communication technique, and more particularly, to a technique for resource sensing and selection in sidelink communication supporting discontinuous reception (DRX) operations.

### [Background Art]

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g., periodic sidelink data) may be transmitted using the CG resources.

Meanwhile, sidelink communication may support a discontinuous reception (DRX) operation. In this case, resource sensing and selection operations considering the DRX operation may be required. In addition, the DRX operation needs to be configured in consideration of a resource sensing period and/or a resource selection period. Methods for efficient DRX operations in the communication system supporting one or more Uu links and one or more sidelinks (SLs) are needed.

### [Disclosure]

### [Technical Problem]

The present disclosure is directed to providing a method and an apparatus for resource sensing and selection for one or more links in a communication system supporting DRX operations.

### [Technical Solution]

An operation method of a first terminal, according to a first embodiment of the present disclosure for achieving the above-described objective, may comprise: establishing a first link between the first terminal and a first communication node; establishing a second link between the first terminal and a second communication node; identifying an overlapping period between a first on-duration period according to a first discontinuous reception (DRX) configuration on the first link and a second on-duration period according to a second DRX configuration on the second link; and performing a reception operation in the overlapping period based on one or more DRX configurations among the first DRX configuration and the second DRX configuration.

The performing of the reception operation may comprise: comparing a priority of the first link to which the first DRX configuration is applied and a priority of the second link to which the second DRX configuration is applied; and in response to determining that the first link has a higher priority than the second link, performing the reception operation for the first communication node based on the first DRX configuration in the overlapping period, wherein each of the first link and the second link is a Uu link or a sidelink (SL).

The performing of the reception operation may comprise: comparing a priority of a first cast type on the first link to which the first DRX configuration is applied and a priority of a second cast type on the second link to which the second DRX configuration is applied; and in response to determining that the first cast type has a higher priority than the second cast type, performing the reception operation for the first communication node based on the first DRX configuration in the overlapping period, wherein each of the first cast type and the second cast type is broadcast, groupcast, or unicast.

The performing of the reception operation may comprise: comparing a length of a first DRX cycle according to the first DRX configuration with a length of a second DRX cycle according to the second DRX configuration; and in response to determining that the length of the first DRX cycle is longer than the length of the second DRX cycle, performing the reception operation for the first communication node based on the first DRX configuration in the overlapping period.

The performing of the reception operation may comprise: performing the reception operation for the first communication node based on the first DRX configuration in a first time resource region within the overlapping period; and performing the reception operation for the second communication node based on the second DRX configuration in a second time resource region subsequent to the first time resource region within the overlapping period.

A guard time may be configured between the first time resource region and the second time resource region, and sizes of the first time resource region and the second time resource region may be configured to be different from each other in each of overlapping periods between first on-duration periods according to the first DRX configuration and second on-duration periods according to the second DRX configuration.

The performing of the reception operation may comprise: performing the reception operation for the first communication node based on the first DRX configuration in odd-numbered overlapping periods among overlapping periods between first on-duration periods according to the first DRX configuration and second on-duration periods according to the second DRX configuration; and performing the reception operation for the second communication node based on the second DRX configuration in even-numbered overlapping periods among the overlapping periods between the first on-duration periods according to the first DRX configuration and the second on-duration periods according to the second DRX configuration.

An operation method of a first terminal, according to a second embodiment of the present disclosure for achieving the above-described objective, may comprise: establishing a first link between the first terminal and a first communication node; establishing a second link between the first terminal and a second communication node; identifying an overlapping period between a first on-duration period according to a first discontinuous reception (DRX) configuration on the first link and a second on-duration period according to a second DRX configuration on the second link; and performing a resource sensing operation on one link having a higher priority among the first link and the second link in the overlapping period.

The performing of the resource sensing operation may comprise: comparing a degree of congestion on the first link to which the first DRX configuration is applied and a degree of congestion on the second link to which the second DRX configuration is applied; and performing the resource sensing operation for one link having a lower congestion degree among the first link and the second link.

The performing of the resource sensing operation may comprise: comparing a priority of a first cast type on the first link to which the first DRX configuration is applied and a priority of a second cast type on the second link to which the second DRX configuration is applied; and in response to determining that the first cast type has a higher priority than the second cast type, performing the resource sensing operation on the first link in the overlapping period, wherein each of the first cast type and the second cast type is broadcast, groupcast, or unicast.

The performing of the resource sensing operation may comprise: comparing a length of a first DRX cycle according to the first DRX configuration with a length of a second DRX cycle according to the second DRX configuration; and in response to determining that the length of the first DRX cycle is longer than the length of the second DRX cycle, performing the resource sensing operation on the first link in the overlapping period.

Each of the first link and the second link may be a Uu link or a sidelink (SL), and the first terminal may perform a function of a transmitting terminal on the first link and the second link.

An operation method of a first terminal, according to a third embodiment of the present disclosure for achieving the above-described objective, may comprise: establishing a first link between the first terminal and a first communication node; establishing a second link between the first terminal and a second communication node; performing a resource sensing operation for a transmission operation to the second communication node in an off-duration period according to a first discontinuous reception (DRX) configuration configured for the first link; performing a resource selection operation based on a result of the resource sensing operation; and transmitting data to the second communication node using a transmission resource selected by the resource selection operation.

A start time of the resource sensing operation may be set to a start time of the off-duration period.

An on-duration period according to the second DRX configuration for the second link existing after an end time of a resource sensing window in which the resource sensing operation is performed may be configured as a resource selection window in which the resource selection operation is performed.

The resource sensing operation may be performed in one or more off-duration periods according to the first DRX configuration, and a length of the one or more off-duration periods may not exceed a length of a resource sensing window configured for the resource sensing operation.

A resource sensing window in which the resource sensing operation is performed may include n off-duration periods according to the first DRX configuration, the resource sensing operation may be performed in the n off-duration periods, and n may be a natural number.

The resource sensing operation may be performed in an overlapping period between the off-duration period and an on-duration period according to the second DRX configuration for the second link.

The performing of the resource sensing operation may comprise: performing the resource sensing operation in a first resource sensing window configured in the off-duration period; and re-performing the resource sensing operation after the first resource sensing window when a degree of congestion on the first resource sensing window is greater than or equal to a threshold.

The re-performing of the resource sensing operation may be performed by a maximum number of re-transmissions, and the maximum number of re-transmissions may be set by higher-layer signaling.

### [Advantageous Effects]

According to the present disclosure, a terminal may form a plurality of links with a plurality of communication nodes, identify an overlapping period of on-duration periods according to DRX configurations for the plurality of links, and perform a reception operation based on one DRX configuration having a high priority in the overlapping period. Therefore, the DRX operation can be efficiently performed, and the performance of the communication system can be improved.

### [Description of Drawings]

FIG. 1 is a conceptual diagram illustrating V2X communication scenarios.
FIG. 2 is a conceptual diagram illustrating an embodiment of a cellular communication system.
FIG. 3 is a conceptual diagram illustrating an embodiment of a communication node constituting a cellular communication system.
FIG. 4 is a block diagram illustrating an embodiment of a user plane protocol stack of a UE performing sidelink communication.
FIG. 5 is a block diagram illustrating a first embodiment of a control plane protocol stack of a UE performing sidelink communication.
FIG. 6 is a block diagram illustrating a second embodiment of a control plane protocol stack of a UE performing sidelink communication.
FIG. 7 is a conceptual diagram illustrating a first embodiment of a communication method in a communication system having a plurality of links.
FIG. 8 is a conceptual diagram illustrating a second embodiment of a communication method in a communication system having a plurality of links.
FIG. 9 is a conceptual diagram illustrating a third embodiment of a communication method in a communication system having a plurality of links.
FIG. 10 is a conceptual diagram illustrating a fourth embodiment of a communication method in a communication system having a plurality of links.
FIG. 11 is a conceptual diagram illustrating a fifth embodiment of a communication method in a communication system having a plurality of links.
FIG. 12 is a conceptual diagram illustrating a sixth embodiment of a communication method in a communication system having a plurality of links.

### [Mode for Invention]

Since the present disclosure may be variously modified and have several forms, specific embodiments will be shown in the accompanying drawings and be described in detail in the detailed description. It should be understood, however, that it is not intended to limit the present disclosure to the specific embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In embodiments of the present disclosure, `(re)transmission' may refer to `transmission', 'retransmission', or `transmission and retransmission', '(re)configuration' may refer to `configuration', `reconfiguration', or 'configuration and reconfiguration', `(re)connection' may refer to 'connection', `reconnection', or 'connection and reconnection', and `(re)access' may refer to 'access', `re-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

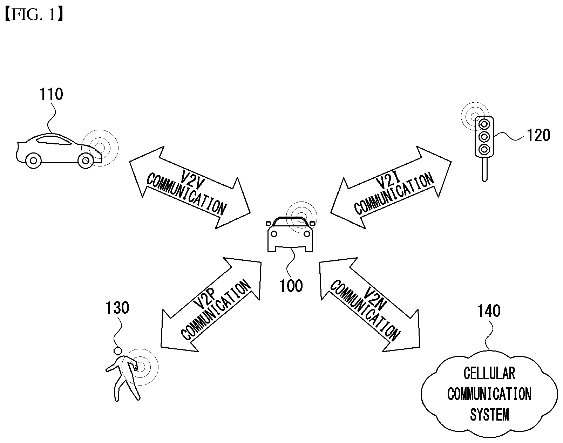

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g., ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected through the cellular communication system 140. The V2N communications may be performed based on the 4G communication technology (e.g., LTE or LTE-A) or the 5G communication technology (e.g., NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

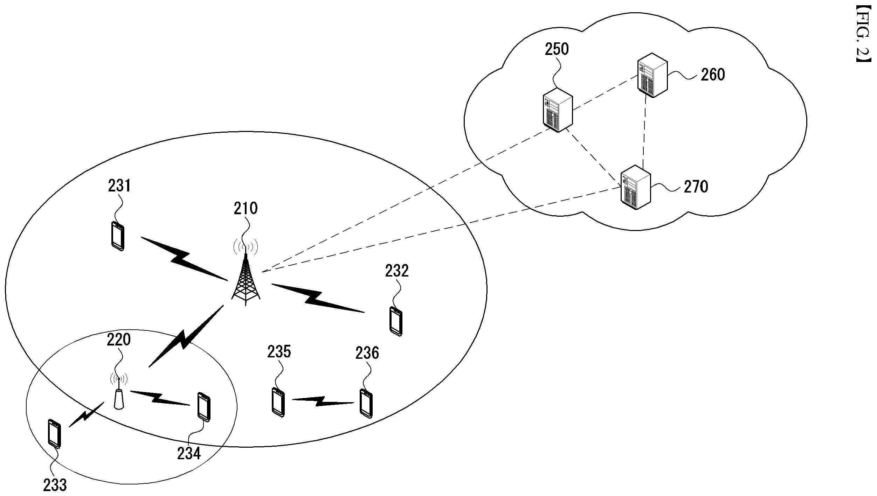

FIG. 2 is a conceptual diagram illustrating an embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slice configured in the core network.

The communication nodes (e.g., base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) comprising the cellular communication system may be configured as follows.

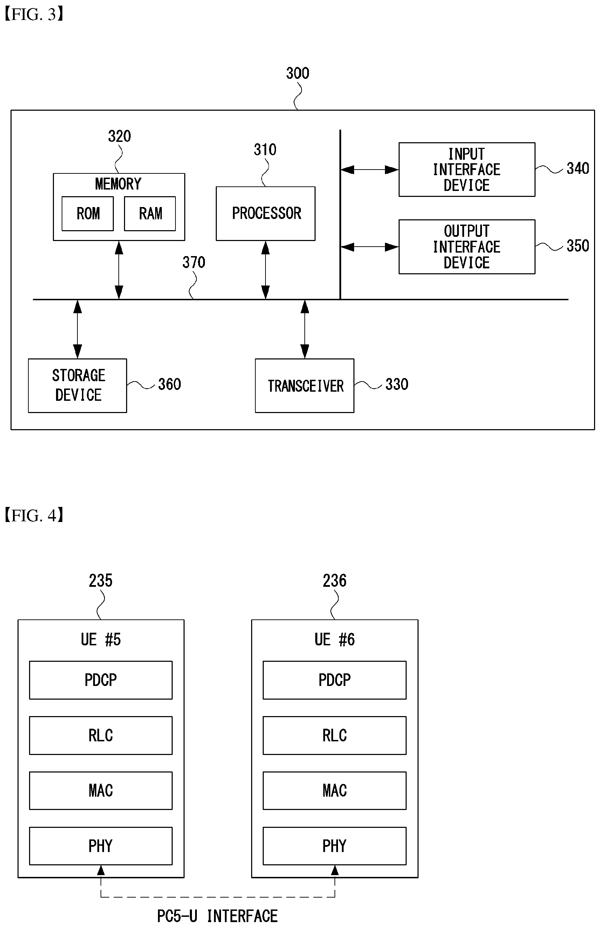

FIG. 3 is a conceptual diagram illustrating an embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a nonvolatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. In other words, the relay 220 may transmit signals received from the base station 210 to the UEs 233 and 234, and may transmit signals received from the UEs 233 and 234 to the base station 210. The SECOND TERMINAL34 may belong to both of the cell coverage of the base station 210 and the cell coverage of the relay 220, and the SECOND TERMINAL33 may belong to the cell coverage of the relay 220. In other words, the SECOND TERMINAL33 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the SECOND TERMINAL35 may be the communication node located in the first vehicle 100 of FIG. 1 and the SECOND TERMINAL36 may be the communication node located in the second vehicle 110 of FIG. 1. When V2I communications are performed using the sidelink communication technique, the SECOND TERMINAL35 may be the communication node located in first vehicle 100 of FIG. 1 and the SECOND TERMINAL36 may be the communication node located in the infrastructure 120 of FIG. 1. When V2P communications are performed using the sidelink communication technique, the SECOND TERMINAL35 may be the communication node located in first vehicle 100 of FIG. 1 and the SECOND TERMINAL36 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of SECOND TERMINAL35** | **Position of SECOND TERMINAL36** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

FIG. 4 is a block diagram illustrating an embodiment of a user plane protocol stack of a UE performing sidelink communication.

As shown in FIG. 4, a left UE may be the SECOND TERMINAL35 shown in FIG. 2 and a right UE may be the SECOND TERMINAL36 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

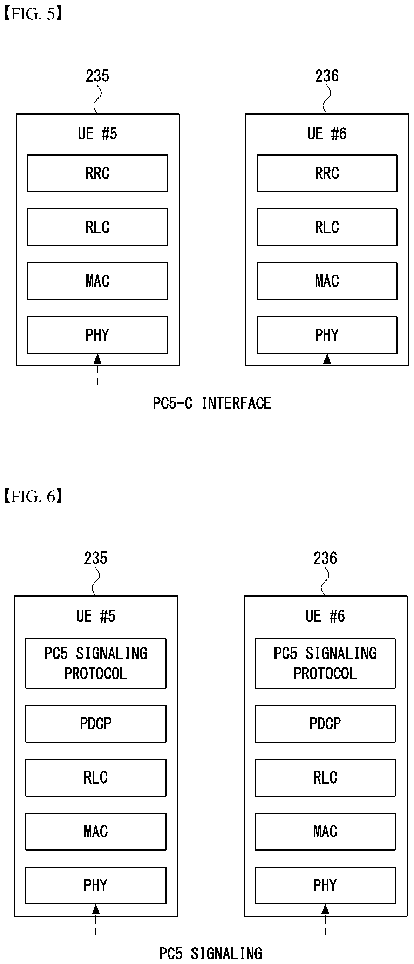

FIG. 5 is a block diagram illustrating a first embodiment of a control plane protocol stack of a UE performing sidelink communication, and FIG. 6 is a block diagram illustrating a second embodiment of a control plane protocol stack of a UE performing sidelink communication.

As shown in FIGS. 5 and 6, a left UE may be the SECOND TERMINAL35 shown in FIG. 2 and a right UE may be the SECOND TERMINAL36 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., SECOND TERMINAL35 or 236) by a higher layer signaling. The PSCCH may be used for transmitting and receiving sidelink control information (SCI) and may also be configured in the UE (e.g., SECOND TERMINAL35 or 236) by a higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g., SECOND TERMINAL35 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., SECOND TERMINAL35 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. In other words, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In embodiments described below, an operation of a vehicle may be an operation of a communication node located in the vehicle.

In embodiments, signaling may be one or a combination of two or more of higher layer signaling, MAC signaling, and physical (PHY) signaling. A message used for higher layer signaling may be referred to as a `higher layer message' or `higher layer signaling message'. A message used for MAC signaling may be referred to as a `MAC message' or `MAC signaling message'. A message used for PHY signaling may be referred to as a `PHY message' or `PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as `first-stage SCI', and the 2nd-stage SCI may be referred to as `second-stage SCI'. A format of the first-stage SCI may include a SCI format 1-A, and a format of the second-stage SCI may include a SCI format 2-A and a SCI format 2-B.

The 1st-stage SCI may include or more information elements among priority information, frequency resource assignment information, time resource assignment information, resource reservation period information, demodulation reference signal (DMRS) pattern information, 2nd-stage SCI format information, a beta_offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements.

In embodiments, `configuring an operation (e.g., DRX operation)' may refer to signaling of `configuration information (e.g., information elements, parameters) for the operation' and/or `information instructing to perform the operation'. `Configuring an information element (e.g., parameter)' may mean that the information element is signaled. The signaling may be at least one of system information (SI) signaling (e.g., transmission of a system information block (SIB) and/or master information block (MIB)), RRC signaling (e.g., transmission of an RRC parameter and/or higher layer parameter), MAC control element (CE) signaling, or PHY signaling (e.g., transmission of downlink control information (DCI), uplink control information (UCI), and/or sidelink control information (SCI)). Here, the MAC CE signaling operation may be performed through a data channel, the PHY signaling operation may be performed through a control channel or a data channel, and transmission of SCI may refer to transmission of first-stage SCI and/or second-stage SCI.

Meanwhile, sidelink communication may support a DRX operation. A resource sensing/selection operation may be performed in association with the DRX operation (e.g., DRX cycle). In embodiments, a resource sensing/selection operation may refer to `resource sensing operation', `resource selection operation', or `resource sensing operation and resource selection operation'. The DRX operation may be configured in consideration of the resource sensing/selection operation (e.g., resource sensing/selection period). In embodiments, a resource sensing/selection period may refer to `resource sensing period', `resource selection period', or `resource sensing period and resource selection period'. The resource sensing period may mean a resource sensing window, and the resource selection period may mean a resource selection window. The DRX operation may be applied to a transmitting terminal, a receiving terminal, or both a transmitting terminal and a receiving terminal. In embodiments, a transmitting terminal may mean a terminal transmitting data (e.g., sidelink (SL) data), and a receiving terminal may mean a terminal receiving the data (e.g., SL data).

When a DRX operation is used, a receiving terminal may operate according to a DRX cycle. The DRX cycle may include an on-duration and an off-duration. In embodiments, an on-duration may be referred to as an on-duration period, and an off-duration may be referred to as an off-duration period. The receiving terminal may operate in an ON state (e.g., wake-up state) in an on-duration period within the DRX cycle. In other words, the receiving terminal may perform a reception operation and/or a transmission operation in the on-duration period. The receiving terminal may operate in an OFF state (e.g., sleep state, idle state, or inactive state) in an off-duration period within the DRX cycle. In other words, the receiving terminal may not perform a reception operation and/or a transmission operation in the off-duration period.

DRX configuration information may include information on the DRX cycle, information on the on-duration, and/or information on the off-duration. The DRX configuration information may be signaled from a communication node (e.g., base station and/or transmitting terminal) to the transmitting terminal and/or receiving terminal. The transmitting terminal may attempt data transmission in an on-duration period based on the DRX configuration information configured in the receiving terminal(s). The data transmission may be performed based on a unicast scheme, groupcast scheme, multicast scheme, or broadcast scheme. When the groupcast scheme is used, the transmitting terminal may attempt data transmission in an on-duration period based on the DRX configuration information configured in a group including one or more receiving terminals.

A terminal may support communication on a plurality of links. The terminal may perform a function of a receiving terminal on one or more links among the plurality of links. In this case, the terminal may attempt data reception in an on-duration period based on DRX configuration information configured for the receiving terminal. The terminal may operate in the ON state in an on-duration period according to the DRX configuration information. Accordingly, when the terminal performs a function of a transmitting terminal on another link, the terminal may perform a transmission operation and/or a reception operation based on the DRX configuration information.

That a terminal (e.g., transmitting terminal) performs a transmission operation and/or reception operation in an on-duration period according to DRX configuration may be referred to as `per-direction discontinuous transmission or reception (DTRX) operation. That a terminal (e.g., receiving terminal) performs a reception operation in an on-duration period according to DRX configuration information may be referred to as `per-direction DRX operation'. That a per-direction DTRX operation and a per-direction DRX operation are simultaneously performed on one link may be referred to as `both-direction (bi-directional) DTRX operation'. The same DRX configuration information may be applied to links on which the DRX operations are performed. When a transmitting terminal and a receiving terminal have different DRX configuration information, a per-direction DTRX operation and a per-direction DRX operation may be performed.

DRX operations on a plurality of links may be performed based on the same DRX configuration information. Alternatively, DRX operations on a plurality of links may be performed based on different DRX configuration information. A DRX configuration configured for a link may refer to DRX configuration information configured in a receiving terminal on the link. In this case, the transmitting terminal may operate in consideration of the above-described DRX configuration information.

### [DRX operation, resource sensing operation, and resource selection operation in an environment where a receiving terminal communicates with a plurality of communication nodes through a plurality of links]

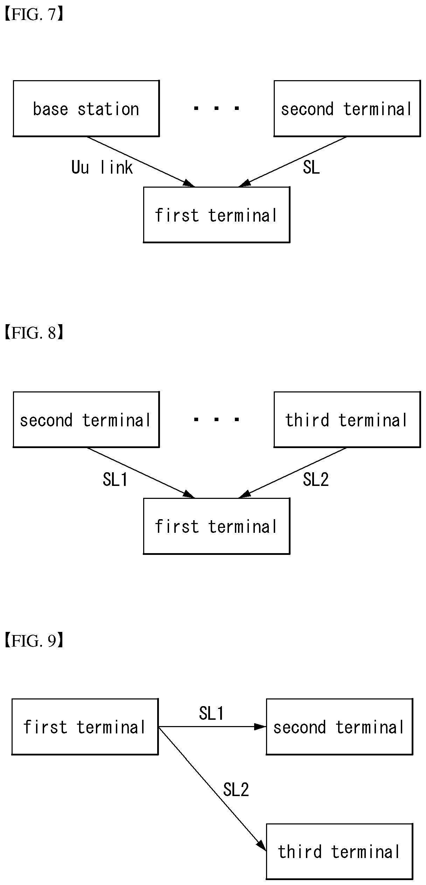

FIG. 7 is a conceptual diagram illustrating a first embodiment of a communication method in a communication system having a plurality of links.

As shown in FIG. 7, a first terminal may communicate with one or more base stations and one or more terminals through a plurality of links. A Uu link may be established between the first terminal and a base station, and the first terminal may communicate with the base station through the Uu link. On the Uu link, the first terminal may perform a function of a receiving terminal. A sidelink (SL) may be established between the first terminal and a second terminal, and the first terminal may communicate with the second terminal through the SL. On the SL, the first terminal may perform a function of a receiving terminal, and the second terminal may perform a function of a transmitting terminal. DRX operations may be performed on the Uu link and the SL. A DRX configuration for the Uu link may be referred to as `Uu-DRX configuration', and a DRX configuration for the SL may be referred to as `SL-DRX configuration'. The Uu-DRX configuration may be the same as the SL-DRX configuration. Alternatively, the Uu-DRX configuration may be different from the SL-DRX configuration.

The second terminal may perform a transmission operation or a reception operation in an on-duration period based on the SL-DRX configuration. Alternatively, the second terminal may perform a transmission operation or a reception operation regardless of the SL-DRX configuration. The second terminal may perform a both-direction discontinuous transmission and reception (DTRX) operation or a per-direction DRX operation. When the both-direction DTRX operation is performed, it may be exceptionally allowed for the second terminal to perform a resource sensing operation based on resource sensing configuration information in an off-duration period according to the SL-DRX configuration.

Communication may be performed as follows according to the Uu-DRX configuration and/or the SL-DRX configuration.

### - An on-duration period according to the Uu-DRX configuration (hereinafter referred to as 'Uu-on-duration period') and an on-duration period according to the SL-DRX configuration (hereinafter referred to as 'SL-on-duration period') may be configured so that they do not overlap with each other.

In the above-described case, the base station may transmit data to the first terminal in a Uu-on-duration period, and the first terminal may perform a reception operation for the base station on the Uu-on-duration period. The second terminal may transmit data to the first terminal in a SL-on-duration period, and the first terminal may perform a reception operation for the second terminal in the SL-on-duration period. When a both-direction DTRX operation is performed on the SL, the second terminal may perform a resource sensing operation based on resource sensing configuration information only in SL-on-duration periods. When a per-direction DRX operation is performed on the SL, the second terminal may perform a resource sensing operation based on resource sensing configuration information regardless of the DRX configuration (e.g., SL-DRX configuration). The second terminal may perform a resource selection operation in the earliest SL-on-duration period among SL-on-duration periods after completion of the resource sensing operation, and transmit data using transmission resources selected by the resource selection operation.

### - A Uu-on-duration period and a SL-on-duration period may be configured to partially overlap.

In the above-described case, the first terminal may compare a priority of the Uu-DRX configurations (e.g., Uu link to which the Uu-DRX configuration is applied) and a priority of the SL-DRX configuration (e.g., SL to which the SL-DRX configuration is applied), and may perform a DRX operation based on a DRX configuration having a higher priority among the Uu-DRX configuration and the SL-DRX configuration. The above-described operation may be performed in an overlapping period (e.g., partially overlapping period) between the Uu-on-duration period and the SL-on-duration period. The first terminal may identify the overlapping period based on the DRX configurations. When the Uu-DRX configuration has a higher priority than the SL-DRX configuration (e.g., if the priority of the Uu link is higher than the priority of the SL), the first terminal may perform a reception operation for the base station in the Uu-on-duration period. In the Uu-on-duration period, a reception operation for the second terminal may be stopped. The first terminal may perform a reception operation for the second terminal in a SL-on-duration period that does not overlap with a Uu-on-duration period.

The priority of the DRX configuration may be determined based on a cast type (e.g., broadcast, multicast, groupcast, or unicast). For example, a priority of groupcast may be higher than a priority of unicast. When communication is performed in a unicast scheme on the Uu link and communication is performed in a groupcast scheme on the SL, the first terminal may perform a reception operation for the second terminal in the overlapping period between the Uu-on-duration period and the SL-on-duration period.

The priority of the DRX configuration may be determined based on DRX parameter(s) (e.g., DRX cycle, on-duration period, off-duration period). For example, a DRX configuration having a longer DRX cycle among the Uu-DRX configuration and the SL-DRX configuration may be interpreted as having a higher priority. The first terminal may perform a reception operation based on a DRX configuration having a longer DRX cycle in the overlapping period between the Uu-on-duration period and the SL-on-duration period.

The second terminal may perform a resource sensing operation based on the DRX configuration and/or resource sensing configuration information, may perform a resource selection operation in the earliest SL-on-duration period after completion of the resource sensing operation, and transmit data to the first terminal using transmission resources selected by the resource selection operation. Methods extended based on the above DRX configuration priority determination methods and/or combined forms of the above DRX configuration priority determination methods may be used.

### - A Uu-on-duration period and a SL-on-duration period may be configured to fully overlap.

The first terminal may identify an overlapping period based on the DRX configurations. The first terminal may not be able to simultaneously perform a reception operation for the base station and a reception operation for the second terminal in the overlapping period between the Uu-on-duration period and the SL-on-duration period. Therefore, the first terminal may compare a priority of the Uu link (e.g., Uu-DRX configuration) and a priority of the SL (e.g., SL-DRX configuration), and may perform a reception operation on a link having a higher priority (e.g., Uu link or SL). Alternatively, the overlapping period may be divided into a first time resource region and a second time resource region, a reception operation for the base station may be performed in the first time resource region, and a reception operation for the second terminal may be performed in the second time resource region. A communication node (e.g., base station and/or transmitting terminal) may signal configuration information on the time resource regions to the first terminal.

A DRX operation on a link having a higher priority may be performed in the overlapping period. For example, the priority of the Uu link may be higher than that of the SL. In this case, the first terminal may perform a reception operation for the base station in the overlapping period (e.g., Uu-on-duration period) until the Uu-DRX operation is stopped. For another example, the priority of the SL may be higher than the priority of the Uu link. In this case, the first terminal may perform a reception operation for the base station in the overlapping period (e.g., SL-on-duration period) until the SL-DRX operation is stopped.

The overlapping period (e.g., Uu-on-duration period and/or SL-on-duration period) may be configured to be divided into a first time resource region and a second time resource region. The first time resource region may be configured as a period from a start time of the overlapping period to a specific time of the overlapping period. The second time resource region may be configured as a period from a specific time of the overlapping period to an end time of the overlapping period. The first terminal may perform a reception operation for the base station in the first time resource region, and may perform a reception operation for the second terminal in the second time resource region. Alternatively, the first terminal may perform a reception operation for the second terminal in the first time resource region, and may perform a reception operation for the base station in the second time resource region. A guard time may be configured between the first time resource region and the second time resource region for an operation of processing switching between the reception operations.

Alternatively, the sizes of the time resource regions in each of the on-duration periods (e.g., overlapping periods, Uu-on-duration periods, and SL-on-duration periods) may be configured differently. For example, the size of the first time resource region may be configured to be larger than the size of the second time resource region in odd-numbered on-duration periods, and the size of the first time resource region may be configured to be smaller than the size of the second time resource region in even-numbered on-duration periods.

Alternatively, a reception operation for a different communication node may be configured to be performed in each of the on-duration periods (e.g., overlapping periods, Uu-on-duration periods, and SL-on-duration periods). For example, the reception operations for the base station may be configured to be performed in the odd-numbered on-duration periods, and the reception operations for the second terminal may be configured to be performed in the even-numbered on-duration periods.

The size of the time resource region within the on-duration period may be configured based on the DRX configuration (e.g., DRX cycle), cast type, and/or the like. Embodiments extended based on the above embodiments and/or combined forms of the above embodiments may be used.

FIG. 8 is a conceptual diagram illustrating a second embodiment of a communication method in a communication system having a plurality of links.

As shown in FIG. 8, a first terminal may communicate with a plurality of terminals through a plurality of links. A SL1 may be established between the first terminal and a second terminal, and the first terminal may communicate with the second terminal through the SL1. On the SL1, the first terminal may perform a function of a receiving terminal, and the second terminal may perform a function of a transmitting terminal. A SL2 may be established between the first terminal and a third terminal, and the first terminal may communicate with the third terminal through the SL2. On the SL2, the first terminal may perform a function of a receiving terminal, and the third terminal may perform a function of a transmitting terminal. DRX operations may be performed on the SL1 and the SL2. A DRX configuration for the SL1 may be referred to as `SL1-DRX configuration', and a DRX configuration for the SL2 may be referred to as `SL2-DRX configuration'. The SL1-DRX configuration may be the same as the SL2-DRX configurations. Alternatively, the SL1-DRX configuration may be different from the SL2-DRX configuration.

The second terminal may perform a transmission operation or a reception operation in an on-duration period based on the SL1-DRX configuration (hereinafter referred to as `SL1-on-duration period'). Alternatively, the second terminal may perform a transmission operation or a reception operation regardless of the SL1-DRX configuration. The second terminal may perform a both-direction DTRX operation or a per-direction DRX operation. When a both-direction DTRX operation is performed, it may be exceptionally allowed for the second terminal to perform a resource sensing operation based on resource sensing configuration information in an off-duration period based on the SL1-DRX configuration.

The third terminal may perform a transmission operation or a reception operation in an on-duration period based on the SL2-DRX configuration (hereinafter referred to as `SL2-on-duration period'). Alternatively, the third terminal may perform a transmission operation or a reception operation regardless of the SL2-DRX configuration. The third terminal may perform a both-direction DTRX operation or a per-direction DRX operation. When a both-direction DTRX operation is performed, it may be exceptionally allowed for the third terminal to perform a resource sensing operation based on resource sensing configuration information in an off-duration period based on the SL2-DRX configuration.

Communication may be performed as follows according to the SL1-DRX configuration and/or the SL2-DRX configuration.

### - A SL1-on-duration period and a SL2-on-duration period may be configured so as not to overlap each other.

In the above-described case, the second terminal may transmit data to the first terminal in a SL1-on-duration period, and the first terminal may perform a reception operation for the second terminal in the SL1-on-duration period. The third terminal may transmit data to the first terminal in a SL2-on-duration period, and the first terminal may perform a reception operation for the third terminal in the SL2-on-duration period.

When a both-direction DTRX operation is performed on the SL1, the second terminal may perform a resource sensing operation based on resource sensing configuration information only in SL1-on-duration period(s). When a per-direction DRX operation is performed on the SL1, the second terminal may perform a resource sensing operation based on resource sensing configuration information regardless of the DRX configuration (e.g., SL1-DRX configuration). After completion of the resource sensing operation, the second terminal may perform a resource selection operation in the earliest SL1-on-duration period among SL1-on-duration periods, and transmit data using transmission resources selected by the resource selection operation. The earliest SL1-on-duration period may be configured as a resource selection window.

When a both-direction DTRX operation is performed on the SL2, the third terminal may perform a resource sensing operation based on resource sensing configuration information only in SL2-on-duration period(s). When a per-direction DRX operation is performed on the SL2, the third terminal may perform a resource sensing operation based on resource sensing configuration information regardless of the DRX configuration (e.g., SL2-DRX configuration). The third terminal may perform a resource selection operation in the earliest SL2-on-duration period among SL2-on-duration periods after completion of the resource sensing operation, and transmit data using transmission resources selected by the resource selection operation. The earliest SL2-on-duration period may be configured as a resource selection window.

### - A SL1-on-duration period and a SL2-on-duration period may be configured to partially overlap.

In the above-described case, the first terminal may compare a priority of the SL1-DRX configuration (e.g., SL1 to which the SL1-DRX configuration is applied) and a priority of the SL2-DRX configuration (e.g., SL2 to which the SL2-DRX configuration is applied), and perform a DRX operation based on a DRX configuration having a higher priority among the SL1-DRX configuration and the SL2-DRX configuration. The above-described operation may be performed in an overlapping period (e.g., partially overlapping period) between the SL1-on-duration period and the SL2-on-duration period. When the SL1-DRX configuration has a higher priority than the SL2-DRX configuration (e.g., when the priority of SL1 is higher than the priority of SL2), the first terminal may perform a reception operation for the second terminal in the SL1-on-duration period. In the SL1-on-duration period, the reception operation for the third terminal may be stopped. The first terminal may perform a reception operation for the third terminal in a SL2-on-duration period that does not overlap with the SL1-on-duration period.

The priority of the DRX configuration may be determined based on a cast type (e.g., broadcast, multicast, groupcast, or unicast). For example, a priority of groupcast may be higher than a priority of unicast. When communication is performed in a unicast scheme on the SL1 and communication is performed in a groupcast scheme on the SL2", the first terminal may perform a reception operation for the third terminal in an overlapping period between the SL1-on-duration period and the SL2-on-duration period. For another example, the priority of unicast may be higher than the priority of groupcast. When communication is performed in a unicast scheme on the SL1 and communication is performed in a groupcast scheme on the SL2, the first terminal may perform a reception operation for the second terminal in an overlapping period between the SL1-on-duration period and the SL2-on-duration period.

The priority of the DRX configuration may be determined based on DRX parameter(s) (e.g., DRX cycle, on-duration period, off-duration period). For example, a DRX configuration having a longer DRX cycle among the SL1-DRX configuration and the SL2-DRX configuration may be interpreted as having a higher priority. The first terminal may perform a reception operation based on a DRX configuration having a longer DRX cycle in an overlapping period between the SL1-on-duration period and the SL2-on-duration period.

Each of the second terminal and the third terminal may perform a resource sensing operation based on the DRX configuration and/or resource sensing configuration information, perform a resource selection operation in the earliest SL-on-duration period after completion of the resource sensing operation, and transmit data to the first terminal using transmission resources selected by the resource selection operation. When frequency resources (or resource pool) on the SL1 are the same as frequency resources (or resource pool) on the SL2, the first terminal may perform reception operations on both the SL1 and the SL2 without considering the priorities of the SL1 and the SL2. Methods extended based on the above DRX configuration priority determination methods and/or combined forms of the above DRX configuration priority determination methods may be used.

### - A SL1-on-duration period and a SL2-on-duration period may be configured to fully overlap.

The first terminal may not be able to simultaneously perform a reception operation for the second station and a reception operation for the third terminal in the overlapping period between the SL1-on-duration period and the SL2-on-duration period. Therefore, the first terminal may perform a reception operation on a link having a higher priority. Alternatively, the overlapping period may be divided into a first time resource region and a second time resource region, a reception operation for the second terminal may be performed in the first time resource region, and a reception operation for the third terminal may be performed in the second time resource region. A communication node (e.g., base station and/or transmitting terminal) may signal configuration information on the time resource regions to the first terminal.

A DRX operation on a link having a higher priority may be performed in the overlapping period. For example, the priority of the SL1 may be higher than that of the SL2. In this case, the first terminal may perform a reception operation for the second terminal in the overlapping period (e.g., SL1-on-duration period) until the SL1-DRX operation is stopped. For another example, the priority of the SL2 may be higher than the priority of the SL1. In this case, the first terminal may perform a reception operation for the third terminal in the overlapping period (e.g., SL2-on-duration period) until the SL2-DRX operation is stopped.

The overlapping period (e.g., SL1-on-duration period and/or SL2-on-duration period) may be configured to be divided into a first time resource region and a second time resource region. The first time resource region may be configured as a period from a start time of the overlapping period to a specific time of the overlapping period. The second time resource region may be configured as a period from a specific time of the overlapping period to an end time of the overlapping period. The first terminal may perform a reception operation for the second terminal in the first time resource region, and may perform a reception operation for the third terminal in the second time resource region. Alternatively, the first terminal may perform a reception operation for the third terminal in the first time resource region, and may perform a reception operation for the second station in the second time resource region. A guard time may be configured between the first time resource region and the second time resource region for an operation of processing switching between the reception operations.

Alternatively, the sizes of the time resource regions in each of the on-duration periods (e.g., overlapping periods, SL1-on-duration periods, and SL2-on-duration periods) may be configured differently. For example, the size of the first time resource region may be configured to be larger than the size of the second time resource region in odd-numbered on-duration periods, and the size of the first time resource region may be configured to be smaller than the size of the second time resource region in even-numbered on-duration periods.

Alternatively, a reception operation for a different communication node may be configured to be performed in each of the on-duration periods (e.g., overlapping periods, SL1-on-duration periods, and SL2-on-duration periods). For example, the reception operations for the second terminal may be configured to be performed in the odd-numbered on-duration periods, and the reception operations for the third terminal may be configured to be performed in the even-numbered on-duration periods.

The size of the time resource region within the on-duration period may be configured based on DRX configuration (e.g., DRX cycle), cast type, and/or the like. When frequency resources (or resource pool) on the SL1 are the same as frequency resources (or resource pool) on the SL2, the first terminal may perform reception operations for both the SL1 and the SL2 without configuration of the time resource regions within the SL-on-duration period. The above-described operation may be applied to avoid a collision between a transmission signal of the second terminal and a transmission signal of the third terminal within the SL-on-duration period. Embodiments extended based on the above embodiments and/or combined forms of the above embodiments may be used.

### [DRX operation, resource sensing operation, and resource selection operation in an environment in which a transmitting terminal communicates with a plurality of communication nodes through a plurality of links]

FIG. 9 is a conceptual diagram illustrating a third embodiment of a communication method in a communication system having a plurality of links.

As shown in FIG. 9, a first terminal may communicate with a plurality of terminals through a plurality of links. A SL1 may be established between the first terminal and a second terminal, and the first terminal may communicate with the second terminal through the SL1. On the SL1, the first terminal may perform a function of a transmitting terminal, and the second terminal may perform a function of a receiving terminal. A SL2 may be established between the first terminal and a third terminal, and the first terminal may communicate with the third terminal through the SL2. On the SL2, the first terminal may perform a function of a transmitting terminal, and the third terminal may perform a function of a receiving terminal. DRX operations may be performed on the SL1 and SL2. A DRX configuration for the SL1 may be referred to as SL1-DRX configuration, and a DRX configuration for the SL2 may be referred to as SL2-DRX configuration. The SL1-DRX configuration (e.g., DRX cycle) may be the same as the SL2-DRX configuration (e.g., DRX cycle). Alternatively, the SL1-DRX configuration may differ from the SL2-DRX configuration.

The second terminal may perform a transmission operation or a reception operation within a SL1-on-duration period. Alternatively, the second terminal may perform a transmission operation or a reception operation regardless of the SL1-DRX configuration. The second terminal may perform a both-direction DTRX operation or a per-direction DRX operation. When a both-direction DTRX operation is performed, it may be exceptionally allowed for the transmitting terminal (e.g., the first terminal) to perform a resource sensing operation based on resource sensing configuration information in an off-duration period based on the SL1-DRX configuration.

The third terminal may perform a transmission operation or a reception operation in a SL2-on-duration period. Alternatively, the third terminal may perform a transmission operation or a reception operation regardless of the SL2-DRX configuration. The third terminal may perform a both-direction DTRX operation or a per-direction DRX operation. When a both-direction DTRX operation is performed, it may be exceptionally allowed for the transmitting terminal (e.g., the first terminal) to perform a resource sensing operation based on resource sensing configuration information in an off-duration period based on the SL2-DRX configuration.

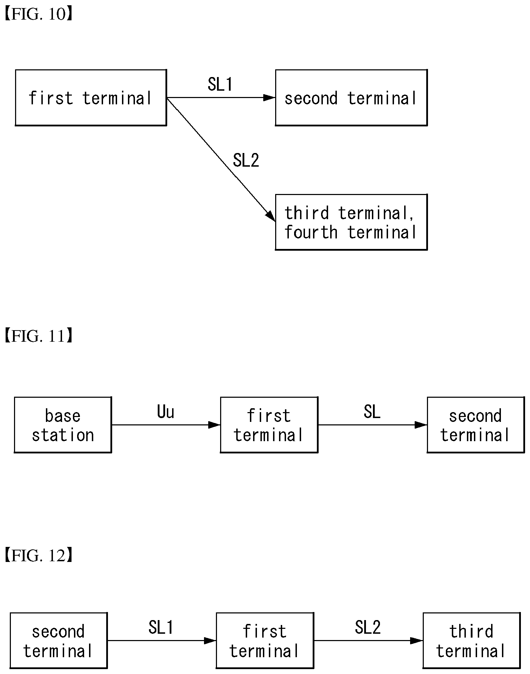

When the first terminal performs a resource sensing operation for data transmission on the SL1 and a resource sensing operation for data transmission on the SL2, a resource sensing period on the SL1 may overlap with a resource sensing period on the SL2. In this case, the first terminal may perform the resource sensing operation based on Method 1 and/or Method 2 below.
- **Method 1:** When ranges of physical resources (e.g., time resources and/or frequency resources) in which resource sensing operations are performed on the SL1 and SL2 are similar or when it is possible for the resource sensing operations on the SL1 and SL2 are simultaneously performed in terms of hardware, the first terminal may simultaneously perform the resource sensing operations on the SL1 and SL2. Thereafter, the first terminal may perform a resource selection operation based on a result of the resource sensing operation in each of a SL1-on-duration period and a SL2-on-duration period.
- **Method 2:** When ranges of physical resources (e.g., time resources and/or frequency resources) in which resource sensing operations are performed on the SL1 and SL2 are different or when it is impossible for the resource sensing operations on the SL1 and SL2 are simultaneously performed in terms of hardware, the first terminal may preferentially perform the resource sensing operation on a link having a higher priority among the SL1 and SL2. The priority of the link may be determined based on a degree of congestion, DRX configuration (e.g., DRX cycle), and/or cast type of the link. The degree of congestion (e.g., link congestion degree) may be determined based on a CBR and/or CR. The degree of congestion may be determined based on a result of the resource sensing operation. For example, the first terminal may preferentially perform a resource sensing operation on a link having a lower degree of congestion among the SL1 and SL2. Alternatively, the first terminal may preferentially perform a resource sensing operation on a link having a longer DRX cycle among the SL1 and SL2. Alternatively, when groupcast has a higher priority among cast types, the first terminal may preferentially perform a resource sensing operation on a link in which groupcast communication is performed among the SL1 and SL2. Method 2 described above may be applied not only to the embodiment of FIG. 9 but also to an embodiment of FIG. 10 below.

Methods extended based on the above methods and/or a combined form of the above methods may be used.

FIG. 10 is a conceptual diagram illustrating a fourth embodiment of a communication method in a communication system having a plurality of links.

As shown in FIG. 10, a first terminal may communicate with a plurality of terminals through a plurality of links. A SL1 may be established between the first terminal and a second terminal, and the first terminal may communicate with the second terminal through the SL1. Unicast communication may be performed on the SL1. On the SL1, the first terminal may perform a function of a transmitting terminal, and the second terminal may perform a function of a receiving terminal. A SL2 may be established between the first terminal and both of a third terminal and a fourth terminal, and the first terminal may communicate with the third terminal and the fourth terminal through the SL2. Groupcast communication may be performed on the SL2. On the SL2, the first terminal may perform a function of a transmitting terminal, and the third terminal and the fourth terminal may perform functions of receiving terminals. DRX operations may be performed on the SL1 and SL2. A DRX configuration for the SL1 may be referred to as SL1-DRX configuration, and a DRX configuration for the SL2 may be referred to as SL2-DRX configuration. The SL1-DRX configuration (e.g., DRX cycle) may be the same as the SL2-DRX configuration (e.g., DRX cycle). Alternatively, the SL1-DRX configuration may be different from the SL2-DRX configuration.

When unicast communication is performed on the SL1 and groupcast communication is performed on the SL2, the first terminal may preferentially perform a resource sensing operation on the SL2. When the resource sensing operation is completed, the first terminal may perform a resource selection operation. A transmission resource (e.g., time resource and/or frequency resource) selected by a resource selection operation on the SL1 may overlap with a transmission resource selected by a resource selection operation on the SL2. In this case, the first terminal may not be able to simultaneously perform transmission operations on the SL1 and SL2.

Accordingly, the first terminal may preferentially perform a resource selection operation on a link having a higher priority among the SL1 and SL2. The priority of the link may be determined based on a degree of congestion, DRX configuration (e.g., DRX cycle), and/or cast type of the link. For example, the first terminal may preferentially perform a resource selection operation on a link having a lower degree of congestion among the SL1 and SL2.

Alternatively, the first terminal may preferentially perform a resource selection operation on a link having a longer DRX cycle among the SL1 and SL2. Alternatively, when groupcast has a higher priority among cast types, the first terminal may preferentially perform a resource selection operation on a link in which groupcast communication is performed among the SL1 and SL2. Methods extended based on the above methods and/or combined forms of the above methods may be used. The above method(s) described with reference to FIG. 10 may also be applied to the embodiment of FIG. 9. The above method(s) described with reference to FIG. 10 may be included in Method 2 in the embodiment of FIG. 9.

FIG. 11 is a conceptual diagram illustrating a fifth embodiment of a communication method in a communication system having a plurality of links, and FIG. 12 is a conceptual diagram illustrating a sixth embodiment of a communication method in a communication system having a plurality of links.

As shown in FIGS. 11 and 12, a first terminal may perform functions of a transmitting terminal and a receiving terminal. In the embodiment of FIG. 11, a Uu link may be established between the first terminal and a base station, a SL may be established between the first terminal and a second terminal, and the first terminal may be a receiving terminal for the base station on the Uu link, and the first terminal may be a transmitting terminal for the second terminal on the SL. In the embodiment of FIG. 12, a SL1 may be established between the first terminal and the second terminal, and a SL2 may be established between the first terminal and a third terminal, and the first terminal may be a receiving terminal for the second terminal on the SL1, and the first terminal may be a transmitting terminal for the third terminal on the SL2. In the embodiment of FIG. 11, DRX operations may be performed on the Uu link and the SL, and DRX configurations for the Uu link and the SL may be the same or different. In the embodiment of FIG. 12, DRX operations may be performed on the SL1 and SL2, and DRX configurations for the SL1 and SL2 may be the same or different. The first terminal may perform a transmission operation or a reception operation in an on-duration period of each link. Alternatively, the first terminal may perform a transmission operation or a reception operation regardless of the DRX configuration.

In the embodiment of FIG. 11, when a resource sensing operation is required during the DRX operation, the first terminal may perform a resource sensing operation for SL transmission based on resource sensing configuration information in a Uu-off-duration period, and may perform a resource selection operation for SL transmission based on a result of the resource sensing operation in a SL-on-duration period. The SL-on-duration period may be configured as a resource selection window. The resource sensing configuration information may be configured in consideration of the DRX operation (e.g., Uu-DRX operation).

The first terminal may perform the resource sensing/selection operation based on method(s) below. A start time of the resource sensing operation of the first terminal may be set to a start time of an off-duration period (hereinafter referred to as `Uu-off-duration period') according to the Uu-DRX configuration. The above-described Uu-off-duration period may be the earliest Uu-off-duration period among Uu-off-duration periods after determining whether to perform the resource sensing operation. In this case, one of Methods 3 to 5 below may be performed.
- **Method 3:** When the length of a resource sensing window is L, the first terminal may perform the resource sensing operation only in Uu-off-duration period(s) from a current time. The length of accumulated Uu-off duration periods in which the resource sensing operation is performed may not exceed L. After the resource sensing operation is completed, the first terminal may perform a resource selection operation in a SL-on-duration period. L may be in units of a symbol, mini-slot, slot, or millisecond. When an end time of the resource sensing window is located within the SL-on-duration period, the first terminal may terminate the resource sensing operation at the end time of the resource sensing window, and perform a resource selection operation. The first terminal may perform the resource selection operation from the end time of the resource sensing window in the SL-on-duration period. Alternatively, the first terminal may perform a resource sensing operation in the entire SL-on-duration period where the end time of the resource sensing window is located, and may perform a resource selection operation in the next SL-on-duration period. Alternatively, the first terminal may stop the resource sensing operation from the end time of the resource sensing window in the SL-on-duration period, and perform a resource selection operation in the next SL-on-duration period.
- **Method 4:** A resource sensing window may be configured as n Uu-off-duration periods, n may be a natural number. The first terminal may perform a resource sensing operation only in Uu-off-duration period(s) from a current time. The number of accumulated Uu-off-duration periods in which the resource sensing operation is performed may not exceed n. The first terminal may perform a resource selection operation in a SL-on-duration period after completion of the resource sensing operation. When the resource sensing window is configured as n Uu-off-duration periods, the resource sensing operation may be performed in consecutive n Uu-off-duration periods (e.g., Uu-off-duration #1 to #n). The first terminal may perform a resource selection operation in an SL-on-duration period after the n consecutive Uu-off-duration periods (e.g., on-durations #1 to #n).
- **Method 5:** The first terminal may perform a resource sensing operation in consideration of the DRX configuration (e.g., DRX operation) on each link. The first terminal may perform a resource sensing operation in an overlapping period between a Uu-off-duration period and an SL-on-duration period. The first terminal may perform a resource selection operation in the earliest SL-on-duration after completion of the resource sensing operation.

In Methods 4 and 5, the resource sensing operation may be performed based on preconfigured resource sensing configuration information. Methods extended based on the above methods and/or combined forms of the above methods may be used.

The first terminal may perform the resource sensing operation within the resource sensing window. When a degree of congestion is greater than or equal to a threshold in the resource sensing window, the first terminal may continue performing the resource sensing operation without performing a resource selection operation. In other words, the resource sensing operation may be re-performed. The degree of congestion may be determined based on a result of the resource sensing operation. A communication node (e.g., a base station and/or another transmitting terminal) may signal the threshold, which is a criterion for determining the degree of congestion, to the first terminal. The above threshold may be signaled using at least one of system information, RRC message, MAC CE, or control information (e.g., DCI, SCI). The resource sensing operation may be re-performed as follows.

When the degree of congestion is greater than or equal to the threshold (e.g., when resource selection is impossible), the resource sensing operation in Method 3, Method 4, and Method 5 may be performed in a resource sensing window having a length L, and then the resource sensing operation may be performed continuously. In other words, the resource sensing operation may be re-performed. When the degree of congestion is less than the threshold, the first terminal may terminate the resource sensing operation and may perform a resource selection operation in the earliest SL-on-duration period. In the above-described embodiments, at least one of Methods 6 to 8 below may be used.
- **Method 6:** The first terminal may stop the resource sensing operation in a specific time period before re-performing the resource sensing operation, and perform the resource sensing operation after the specific time period. The specific time period may be configured to be associated with the DRX cycle.
- **Method 7:** The number of times the resource sensing operation is re-performed may be limited. When the maximum number of re-performing the resource sensing operation is set to 3, the first terminal may continuously perform two resource sensing operations after performing an initial resource sensing operation. Thereafter, the first terminal may stop the resource sensing operation. In addition, the resource selection operation may be stopped.
- **Method 8:** The threshold, which is the criterion for determining the degree of congestion, may be configured to change according to the number of times the resource sensing operation is re-performed. For example, the threshold may decrease as the number of re-performing the resource sensing operation increases. Alternatively, the threshold may increase as the number of re-performing the resource sensing operation increases.

The communication node (e.g., base station and/or another transmitting terminal) may transmit the above-described parameter(s) (e.g., threshold that is the criterion for determining the degree of congestion, specific time period, and/or maximum number of re-performing the resource sensing operation) to the first terminal using at least one of system information, RRC message, MAC CE, or control information (e.g., DCI, SCI). Methods extended based on the above methods and/or combined forms of the above methods may be used.

Methods 3 to 8 have been described with reference to FIG. 11, but Methods 3 to 8 may be applied also to the embodiment of FIG. 12. Methods extended based on the above methods and/or combined forms of the above methods may be applied to the embodiment of FIG. 12.

In the embodiment of FIG. 12, the DRX operation, resource sensing operation, and/or resource selection operation may be performed on a link (e.g., SL1 or SL2) having a higher priority. When a priority of the SL2 (e.g., transmission operation) is higher than that of the SL1 (e.g., reception operation), the resource sensing operation performed in the first terminal may include a resource sensing operation in the SL1-on-duration period. In this case, the second terminal may perform a resource sensing operation in the SL1-on-duration period and the SL1-off-duration period. On the other hand, when the priority of the SL2 (e.g., transmission operation) is lower than the priority of the SL1 (e.g., reception operation), the resource sensing operation performed in the first terminal may not include a resource sensing in the SL1-on-duration period. The above methods, methods extended based on the above methods, and/or combined form of the above methods may be applied to the embodiment of FIG. 11.

The priority of the link may be determined based on the degree of congestion, DRX configuration (e.g., DRX cycle), and/or cast type of the link. For example, when the degree of congestion on the SL2 is lower than that of the SL1, the first terminal may preferentially perform a resource sensing operation in the SL2-on-duration period than a reception operation on the SL1. Alternatively, the first terminal may preferentially perform a resource sensing operation or a reception operation on a link having a longer DRX cycle among the SL1 and SL2. Alternatively, when groupcast has a higher priority among cast types, the first terminal may preferentially perform a resource sensing operation or a reception operation on a link in which groupcast communication is performed among the SL1 and SL2. For example, when unicast communication is performed on the SL1 and groupcast communication is performed on the SL2, the first terminal may prioritize a resource sensing operation on the SL2 over a reception operation on the SL1. Methods extended based on the above methods and/or combined forms of the above methods may be applied to the embodiment of FIG. 12.

The embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An operation method of a first terminal in a communication system, comprising:
establishing a first link between the first terminal and a first communication node;
establishing a second link between the first terminal and a second communication node;
identifying an overlapping period between a first on-duration period according to a first discontinuous reception (DRX) configuration on the first link and a second on-duration period according to a second DRX configuration on the second link; and
performing a reception operation in the overlapping period based on one or more DRX configurations among the first DRX configuration and the second DRX configuration.

2. The operation method according to claim 1, wherein the performing of the reception operation comprises:
comparing a priority of the first link to which the first DRX configuration is applied and a priority of the second link to which the second DRX configuration is applied; and
in response to determining that the first link has a higher priority than the second link, performing the reception operation for the first communication node based on the first DRX configuration in the overlapping period,
wherein each of the first link and the second link is a Uu link or a sidelink (SL).

3. The operation method according to claim 1, wherein the performing of the reception operation comprises:
comparing a priority of a first cast type on the first link to which the first DRX configuration is applied and a priority of a second cast type on the second link to which the second DRX configuration is applied; and
in response to determining that the first cast type has a higher priority than the second cast type, performing the reception operation for the first communication node based on the first DRX configuration in the overlapping period,
wherein each of the first cast type and the second cast type is broadcast, groupcast, or unicast.

4. The operation method according to claim 1, wherein the performing of the reception operation comprises:
comparing a length of a first DRX cycle according to the first DRX configuration with a length of a second DRX cycle according to the second DRX configuration; and
in response to determining that the length of the first DRX cycle is longer than the length of the second DRX cycle, performing the reception operation for the first communication node based on the first DRX configuration in the overlapping period.

5. The operation method according to claim 1, wherein the performing of the reception operation comprises:
performing the reception operation for the first communication node based on the first DRX configuration in a first time resource region within the overlapping period; and
performing the reception operation for the second communication node based on the second DRX configuration in a second time resource region subsequent to the first time resource region within the overlapping period.

6. The operation method according to claim 5, wherein a guard time is configured between the first time resource region and the second time resource region, and sizes of the first time resource region and the second time resource region are configured to be different from each other in each of overlapping periods between first on-duration periods according to the first DRX configuration and second on-duration periods according to the second DRX configuration.

7. The operation method according to claim 1, wherein the performing of the reception operation comprises:
performing the reception operation for the first communication node based on the first DRX configuration in odd-numbered overlapping periods among overlapping periods between first on-duration periods according to the first DRX configuration and second on-duration periods according to the second DRX configuration; and
performing the reception operation for the second communication node based on the second DRX configuration in even-numbered overlapping periods among the overlapping periods between the first on-duration periods according to the first DRX configuration and the second on-duration periods according to the second DRX configuration.

8. An operation method of a first terminal in a communication system, comprising:
establishing a first link between the first terminal and a first communication node;
establishing a second link between the first terminal and a second communication node;
identifying an overlapping period between a first on-duration period according to a first discontinuous reception (DRX) configuration on the first link and a second on-duration period according to a second DRX configuration on the second link; and
performing a resource sensing operation on one link having a higher priority among the first link and the second link in the overlapping period.

9. The operation method according to claim 8, wherein the performing of the resource sensing operation comprises:
comparing a degree of congestion on the first link to which the first DRX configuration is applied and a degree of congestion on the second link to which the second DRX configuration is applied; and
performing the resource sensing operation for one link having a lower congestion degree among the first link and the second link.

10. The operation method according to claim 8, wherein the performing of the resource sensing operation comprises:
comparing a priority of a first cast type on the first link to which the first DRX configuration is applied and a priority of a second cast type on the second link to which the second DRX configuration is applied; and
in response to determining that the first cast type has a higher priority than the second cast type, performing the resource sensing operation on the first link in the overlapping period,
wherein each of the first cast type and the second cast type is broadcast, groupcast, or unicast.

11. The operation method according to claim 8, wherein the performing of the resource sensing operation comprises:
comparing a length of a first DRX cycle according to the first DRX configuration with a length of a second DRX cycle according to the second DRX configuration; and
in response to determining that the length of the first DRX cycle is longer than the length of the second DRX cycle, performing the resource sensing operation on the first link in the overlapping period.

12. The operation method according to claim 8, wherein each of the first link and the second link is a Uu link or a sidelink (SL), and the first terminal performs a function of a transmitting terminal on the first link and the second link.

13. An operation method of a first terminal in a communication system, comprising:
establishing a first link between the first terminal and a first communication node;
establishing a second link between the first terminal and a second communication node;
performing a resource sensing operation for a transmission operation to the second communication node in an off-duration period according to a first discontinuous reception (DRX) configuration configured for the first link;
performing a resource selection operation based on a result of the resource sensing operation; and
transmitting data to the second communication node using a transmission resource selected by the resource selection operation.

14. The operation method according to claim 13, wherein a start time of the resource sensing operation is set to a start time of the off-duration period.

15. The operation method according to claim 13, wherein an on-duration period according to the second DRX configuration for the second link existing after an end time of a resource sensing window in which the resource sensing operation is performed is configured as a resource selection window in which the resource selection operation is performed.

16. The operation method according to claim 13, wherein the resource sensing operation is performed in one or more off-duration periods according to the first DRX configuration, and a length of the one or more off-duration periods does not exceed a length of a resource sensing window configured for the resource sensing operation.

17. The operation method according to claim 13, wherein a resource sensing window in which the resource sensing operation is performed includes an off-duration periods according to the first DRX configuration, the resource sensing operation is performed in the n off-duration periods, and n is a natural number.

18. The operation method according to claim 13, wherein the resource sensing operation is performed in an overlapping period between the off-duration period and an on-duration period according to the second DRX configuration for the second link.

19. The operation method according to claim 13, wherein the performing of the resource sensing operation comprises:
performing the resource sensing operation in a first resource sensing window configured in the off-duration period; and
re-performing the resource sensing operation after the first resource sensing window when a degree of congestion on the first resource sensing window is greater than or equal to a threshold.

20. The operation method according to claim 19, wherein the re-performing of the resource sensing operation is performed by a maximum number of re-transmissions, and the maximum number of re-transmissions is set by higher-layer signaling.
